(19)

Europäisches
Patentamt

European
Patent Office

Office européen
des brevets

(11) **EP 4 462 693 A1**

(12) **EUROPEAN PATENT APPLICATION**

(43) Date of publication:
**13.11.2024 Bulletin 2024/46**

(21) Application number: **23218640.3**

(22) Date of filing: **20.12.2023**

(51) International Patent Classification (IPC):
***H04B 7/06*** *(2006.01)*        ***G06N 3/0455*** *(2023.01)*
***G06N 3/0464*** *(2023.01)*     ***H04L 25/02*** *(2006.01)*

(52) Cooperative Patent Classification (CPC):
**H04B 7/0658; G06N 3/0455; G06N 3/0464;
H04B 7/063; H04L 25/0254**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.05.2023 KR 20230059040
16.11.2023 US 202318511528**

(71) Applicant: **Samsung Electronics Co., Ltd.
Suwon-si, Gyeonggi-do 16677 (KR)**

(72) Inventors:
• **HE, Ziming
Barnet, EN5 4NU (GB)**
• **TONG, Fei
Bassingbourn, SG8 5NX (GB)**
• **FLETCHER, Paul Nicholas
Impington, Cambridge, CB24 9AL (GB)**

(74) Representative: **Kuhnen & Wacker
Patent- und Rechtsanwaltsbüro PartG mbB
Prinz-Ludwig-Straße 40A
85354 Freising (DE)**

(54) **METHOD AND APPARATUS FOR LOW COMPLEXITY BEAMFORMING FEEDBACK IN WIRELESS LOCAL AREA NETWORKS**

(57)    A computer-implemented method performed by a first electronic device for reducing a feedback overhead of beamforming in a wireless communication system, includes: transmitting a first data to a second electronic device; transmitting a data packet to the second electronic device, receiving a second data from the second electronic device; extracting a compressed steering matrix from the second data; obtain uncompressed steering matrix by using a décoder part of an autoencoder, based on the extracted compressed steering matrix; and transmitting, to the second electronic device, a third data via a radio signal beamformed based on the obtained uncompressed steering matrix.

FIG. 1

EP 4 462 693 A1

**Description**

BACKGROUND

1. Field

The disclosure relates to a system and a method for reducing computational complexity in beamforming feedback in a wireless communication system, in particular, the Institute of Electrical and Electronics Engineers (IEEE) 802.11 wireless local area network (WLAN) system.

2. Description of Related Art

Beamforming (in short, "BF") is one of the key techniques used in wireless communication systems such as IEEE 802.11 WLAN system (in short, "WLAN"). For example, with respect to IEEE 802.11 WLAN standards (e.g., IEEE 802.11ax™-2021: "Part 11: Wireless LAN Medium Access Control (MAC) and Physical Layer (PHY) Specifications: Enhancements for High-Efficiency WLAN", 2021), the artificial intelligence machine learning (AIML) topic interest group (TIG) of the IEEE has discussed possible support of artificial intelligence and machine learning by the IEEE 802.11 WLAN standards.

Beamforming is one of research subjects in the AIML TIG. In particular, one goal of beamforming researched by the AIML TIG is to reduce beamforming feedback overhead in existing standards (e.g., IEEE 802.11 standards), and thus, increase overall system throughputs. In the AIML TIG, one technical direction of beamforming adopts conventional machine learning algorithms (e.g., K-means). Another technical direction of beaming relates to modern artificial intelligence schemes, which are described, for example, in the following documents: P. Sangdeh, H. Pirayesh, A. Mobiny and H. Zeng, "LB-SciFi: Online Learning-Based Channel Feedback for MU-MIMO in Wireless LANs," 2020 IEEE 28th International Conference on Network Protocols (ICNP), 2020; IEEE 802.11-23/0290r1, "Study on AI CSI Compression", 2023.

According to one document of the related art (IEEE 802.11-22/1563r2, "AI ML Use Case", Sept. 2022), data used for training artificial intelligence models, schemes, or operations for beamforming may be obtained from 'legacy' beamforming procedure. Throughout the disclosure, the 'legacy' beamforming may mean a conventional method for performing beamforming in wireless communication systems, without using artificial intelligence or machine learning models, schemes, or operations.

Also, the document of the related art suggests that the training may be performed at a beamformer (e.g., Access Point (AP) in WLAN). In this way, beamforming for WLAN may not introduce additional communication overhead in training data collection. However, overhead may be still required for the beamformer to send trained database or codebook along with neural network coefficients to the beamformee. This may be referred to as 'training information update' in the disclosure.

In the related art (e.g., M. Nagel, et al., "A White Paper on Neural Network Quantization", Qualcomm AI Research, 2021.), 'neural network quantization' is a technical area in general AI domain and is used to reduce memory requirement and computational complexity. However, the related art does not suggest how 'neural network quantization' is used to reduce the communication overhead. Also, the related art does not provide sufficient information on reduction of the communication overhead for training information update in beamforming of the wireless communication system such as IEEE 802.11 WLAN.

SUMMARY

Provided are a method and a system of reducing computational complexity of beamforming in a wireless communication system. For example, an advantage of the disclosure is to reduce the computational complexity of beamforming feedback generation by a significant amount.

According to one aspect of the disclosure, a computer-implemented method performed by a first electronic device for reducing a feedback overhead of beamforming in a wireless communication system, includes: transmitting a first data to a second electronic device; transmitting a data packet to the second electronic device; receiving a second data from the second electronic device; extracting a compressed steering matrix from the second data; obtain uncompressed steering matrix by using a decoder part of an autoencoder, based on the extracted compressed steering matrix; and transmitting, to the second electronic device, a third data via a radio signal beamformed based on the obtained uncompressed steering matrix.

According to another aspect of the disclosure, a computer-implemented method performed by a second electronic device for reducing a feedback overhead of beamforming in a wireless communication system, includes: receiving a first data from a first electronic device; receiving a data packet from the first electronic device; estimating a channel between the first electronic device and the second electronic device, based on the received data packet; obtaining a steering matrix based on the estimated channel; compressing the obtained steering matrix by using the first data and by using an encoder of an autoencoder, and putting the compressed steering matrix in a field of a data frame; and transmitting the data frame to the first electronic device.

According to another aspect of the disclosure, A first electronic device of a wireless communication system, includes: a first transceiver; a first memory; a first processor operatively connected with the first memory and the first transceiver, the first processor configured to: transmit a first data to a second electronic device; transmit a data packet to the second electronic device; receive a second data from the second electronic device; extract compressed steering matrix from the second data; obtain uncompressed steering matrix by using a decoder part of an autoencoder, based on the extracted compressed steering matrix; and transmit, to the second electronic device, a third data via a radio signal beamformed based on the obtained uncompressed steering matrix.

BRIEF DESCRIPTION OF THE DRAWINGS

The above and other aspects, features, and advantages of certain embodiments of the disclosure will be more apparent from the following description taken in conjunction with the accompanying drawings, in which:

> FIG. 1 illustrates an overall structure of the Institute of Electrical and Electronics Engineers (IEEE) 802.11 wireless LAN (WLAN) as an example of a wireless communication system;
> FIG. 2 illustrates a wireless communication system having a beamformer (first electronic device) and a beamformee (second electronic device) in accordance with embodiments;
> FIG. 3 illustrates a procedure of beamforming in the related art, for example, a wireless communication system (IEEE 802.11 WLAN);
> FIG. 4 illustrates a structure of beamforming (BF) action frame in the related art, for example, a wireless communication system (IEEE 802.11 WLAN);
> FIG. 5A illustrates a structure of an encoder part of an autoencoder that is an example of neural network modules;
> FIG. 5B illustrates a structure of a decoder part of the autoencoder;
> FIG. 6 illustrates a beamforming phase of the autoencoder in the related art;
> FIG. 7 illustrates a structure of the autoencoder in accordance with embodiments of the disclosure;
> FIG. 8 illustrates a training phase of the autoencoder in accordance with embodiments of the disclosure;
> FIG. 9 illustrates a beamforming phase of the autoencoder in accordance with embodiments of the disclosure; and
> FIG. 10A and FIG. 10B show an example of software codes for implementing a proposed model for autoencoder-based beamforming CSI feedback compression (L=2, N_2=16);
> FIG. 11 illustrates a first flow chart of embodiments of the disclosure; and
> FIG. 12 illustrates a second flow chart of embodiments of the disclosure.

DETAILED DESCRIPTION

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under circumstances.

According to one or more embodiments, the electronic device may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

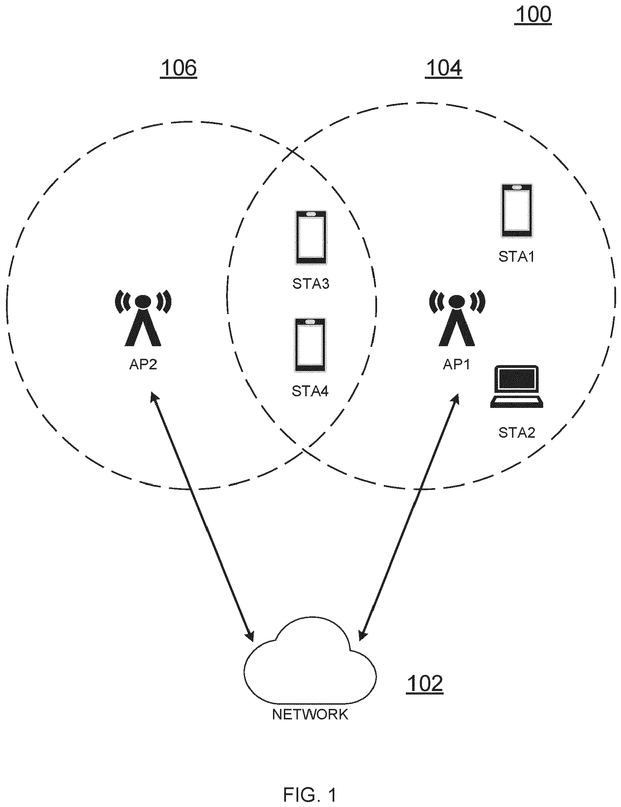

FIG. 1 illustrates an overall structure of the Institute of Electrical and Electronics Engineers (IEEE) 802.11 wireless LAN (WLAN) as an example of a wireless communication system.

In describing embodiments of the disclosure in detail, the focus will mainly be on IEEE 802.11 WLAN, but the disclosure is also applicable to other communication systems (e.g., a cellular communication system such as long term evolution (LTE), LTE-advanced (LTE-A), new radio (NR), wireless broadband (WiBro), a global system for mobile communication (GSM), or a short-range communication system such as Bluetooth and near field communication (NFC)) with a similar technical background and channel form with slight modifications without departing from the scope of the disclosure, as may be determined by one of ordinary skill in the art.

In FIG. 1, in one embodiment, the wireless communication system 100 may include a first access point AP1, a second access point AP2, a first station STA1, a second station STA2, a third station STA3, and a fourth station STA4. The first access point AP1 and the second access point AP2 may access a network 102 that may include the Internet, an Internet protocol (IP) network, or any other network.

The first access point AP1 may provide the first station STA1, the second station STA2, the third station STA3, and the fourth station STA4 with access to the network 102 within a first coverage area 104. Similarly, the second access point AP2 may also provide the third station STA3 and the fourth station STA4 with access to the network 102 within a second coverage area 106. In one embodiment, the first access point AP1 and the second access point AP2 may communicate with at least one of the first station STA1, the second station STA2, the third station STA3, or the fourth station STA4 based on wireless fidelity (WiFi) or any other WLAN access technology.

In one embodiment, the access point (e.g., AP1, AP2) may be referred to as a router, a gateway, and the like. In one embodiment, the station (e.g., STA1, STA2, STA3, and STA4) may be referred to as a mobile station, a subscriber station, a terminal, a mobile terminal, a wireless terminal, user equipment, a user, and the like. The station may be a mobile device, such as a mobile phone, a laptop computer, a wearable device, or the like, or a stationary device, such as a desktop computer, a smart TV, or the like.

The access point may allocate at least one resource unit (RU) to at least one station. The access point may transmit data through at least one allocated resource unit, and at least one station may receive data through at least one allocated resource unit. In 802.11ax (hereafter HE), an access point may allocate only a single resource unit to at least one station, while in 802.11be or next-generation IEEE 802.11 standards, an access point may allocate a multi-resource unit (MRU) including two or more resource units to at least one station. For example, the first access point AP1 may allocate resource units to at least one of the first station STA1, the second station STA2, the third station STA3, or the fourth station STA4, and may transmit data through the allocated resource units.

In one embodiment, an access point and a station may communicate with each other based on beamforming. Single-user beamforming may improve transmission or reception performance of a single user, and multi-user beamforming may improve transmission or reception performance of multiple users by eliminating or reducing interference between multiple users. In one embodiment, an access point may communicate with at least one station based on downlink beamforming. In one embodiment, an access point may communicate with at least one station based on uplink beamforming.

Throughout the disclosure, the access point (e.g., AP1, AP2 of FIG. 1) may correspond to a 'beamformer' or a 'beamformee.' In one embodiment, the station (e.g., STA1, STA2, STA3, and STA4 of FIG. 1) may correspond to a 'beamformer' or a 'beamformee.'

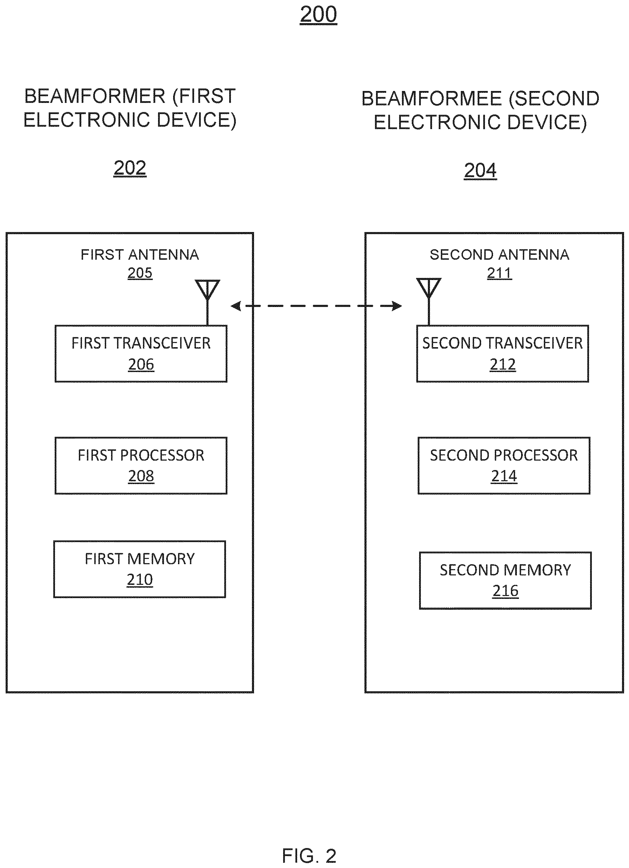

FIG. 2 illustrates a wireless communication system 200 in accordance with embodiments of the disclosure. In detail, FIG. 2 illustrates a beamformer 202 (first electronic device) and a beamformee 204 (second electronic device) that communicate with each other in the wireless communication system 200. Each of the beamformer 202 (first electronic device) and the beamformee 204 (second electronic device) of FIG. 2 may be any apparatus communicating in the wireless communication system 200 and may be referred to as an apparatus for wireless communication. In some example embodiments, each of the beamformer 202 (first electronic device) and the beamformee 204 (second electronic device) may be an access point (e.g., AP1, AP2 of FIG. 1) or a station (e.g., STA1, STA2, STA3, and STA4) in a WLAN system.

In FIG. 2, the beamformer 202 may include a first antenna 205, a first transceiver 206, a first processor 208, and a first memory 210. Similarly, the beamformee 204 may include a second antenna 211, a second transceiver 212, a second processor 214, and a second memory 216.

In one embodiment, the first antenna 205, the first transceiver 206, the first processor 208, and the first memory 210 may be included in one package or may be included in different packages, respectively. In one embodiment, the second antenna 211, the second transceiver 212, the second processor 214, and the second memory 216 may be included in one package or may be included in different packages, respectively.

In one embodiment, the first antenna 205 of the beamformer 202 may receive a signal from the second antenna 211 and provide the received signal to the first transceiver 206, and may transmit the signal provided from the first transceiver 206 to the second antenna 211. Similarly, the second antenna 211 may receive a signal from the first antenna 205 and provide the received signal to the second transceiver 211, and may transmit the signal provided from the second transceiver 212 to the first antenna 205.

In one embodiment, the first antenna 205 and the second antenna 211 may include a plurality of antennas for multiple input multiple output (MIMO). In one embodiment, the first antenna 205 and the second antenna 211 may include a phased array for beamforming.

In one embodiment, the first transceiver 206 of the beamformer 202 may process a signal received from the beamformee 204 through the first antenna 205, and may provide the processed signal to the first processor 208. In one embodiment, the first transceiver 206 may process the signal provided from the first processor 208 and output the processed signal through the first antenna 206. The second transceiver 212 similarly performs the above functions performed by the first transceiver 206.

In one embodiment, the first transceiver 206 and the second transceiver 212 may include one or more analog circuits such as a low noise amplifier, a mixer, a filter, a power amplifier, an oscillator, and the like.

In one embodiment, the first processor 208 of the beamformer 202 may extract information transmitted by the beamformee 204 by processing the signal received from the first transceiver 206. For example, the first processor 208 may extract information by demodulating and/or decoding a signal received from the first transceiver 206.

In one embodiment, the first processor 208 may generate a signal including information to be transmitted to the beamformee 204 and provide the signal to the first transceiver 206. In one embodiment, the first processor 208 may provide a signal generated by encoding and/or modulating data to be transmitted to the beamformee 204 to the first transceiver 206. The second processor 214 similarly performs the above functions performed by the first processor 208.

In one embodiment, the first processor 208 and the second processor 214 may include a programmable component such as a central processing unit (CPU), a digital signal processor (DSP), and the like, may include reconfigurable components, such as field programmable gate arrays (FPGAs), and may include a component that provides a fixed function, such as an intellectual property (IP) core.

In one embodiment, the first processor 208 may include or access the first memory 210 that stores data and/or a series of instructions. In one embodiment, the second processor 214 may include or access the second memory 216 that stores data and/or a series of instructions.

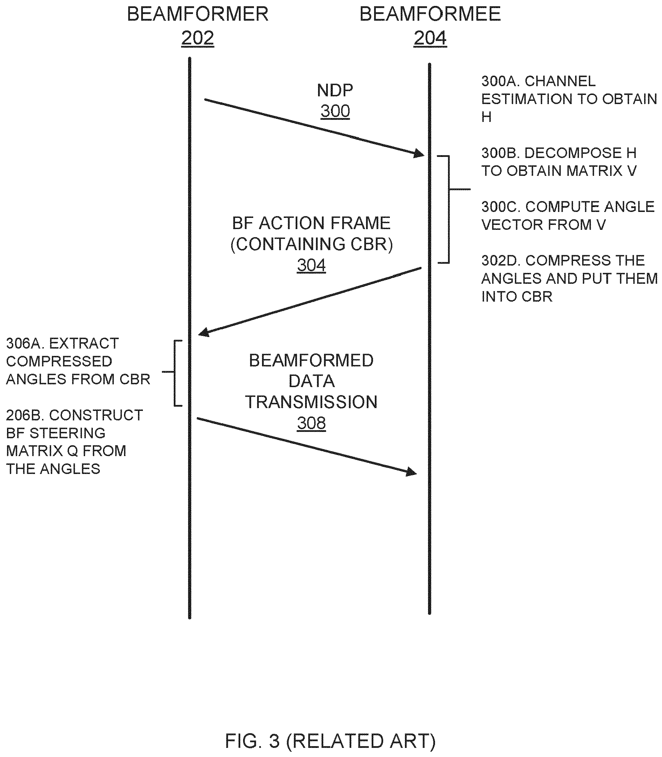

FIG. 3 illustrates the legacy beamforming procedure in the related art, for example, a wireless communication system (IEEE 802.11 WLAN).

In one embodiment, $N_{Tx}$ is the number of antennas at a beamformer, $N_{Rx}$ the number of antenna at a beamformee. Throughout the disclosure, AP1 may be used as an example of the beamformer and STA1 may be used as an example of the beamformee. In alternative embodiments, other devices of FIG. 1 (AP2, STA2, STA3, and STA4) may be the beamformer or the beamformee.

In operation 300, the beamformee 204 receives a null data packet (NDP) from the beamformer 202 for channel sounding.

In operation 302A, the beamformee 204 estimates the channel H with size $N_{Rx} \times N_{Tx}$ at all active subcarriers, based on the received NDP.

In operation 302B, the beamformee 204 selects a number of subcarriers based on grouping parameter $N_g$, and then decomposes a matrix $H$ for a selected subcarrier to obtain a complex unitary matrix V with size $N_{Tx} \times N_{Tx}$. In one embodiment, the decomposition algorithm may be singular value decomposition (SVD):

$$H = U\Sigma V^*$$

Here, $(\cdot)^*$ denotes conjugate transpose.

In operation 302C, an angle vector (containing multiple $\phi$ and $\psi$) are computed from the first $N_c$ ($N_c \leq \min(N_{Tx}, N_{Rx})$) columns of V using Givens rotation. Here, $N_c$ denotes the number of spatial stream for the beamformed data transmission.

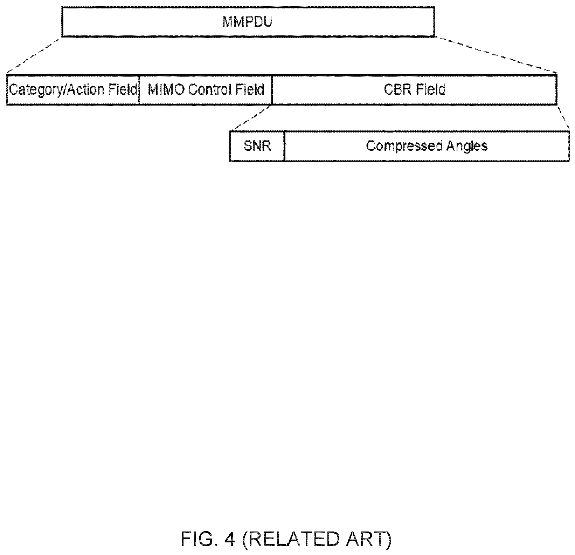

In operation 302D, the angle vector is quantized (compressed) and is sent in the 'compressed beamforming report' (CBR) field of the BF action frame that is illustrated in FIG. 4.

As known in the related art, an angle $\psi$ requires $N_b$ bits and an angle $\phi$ requires $(N_b + 2)$ bits. Per the selected subcarrier, the number of required bits for the compressed angles in CBR is:

$$N_{tot} = N_h N_b + N_h(N_b + 2)$$

Here, $N_h$ denotes the number of angles for $\phi$ or $\psi$ per selected feedback subcarrier, and $N_h$ is calculated as:

$$N_h = [(N_r - N_c) + (N_r - 1)]N_c/2$$

Here, $N_r = N_{Tx}$ denotes the number of rows of V. The signal-to-noise ratio (SNR) field in the CBR (shown in FIG. 4) may be obtained from $\Sigma$, it is an indication of the signal quality of the $N_c$ spatial streams.

In operation 304, the beamformer 202 receives the BF action frame from the beamformee 204.

In operation 306A, the beamformer 202 extracts the angle vector, which corresponds to the matrix $V(:,1:N_c)$, from the CBR received from the beamformee 204.

In operation 206B, the beamformer 202 constructs a steering matrix Q with size $N_r \times N_c$, which is used in the beamformed data transmission. Usually, the last row of $Q$ is real-value, the number of required real-value to represent a $Q$ is $P = 2N_rN_c - 2$. If a number of antenna increases, a number of required bits for the compressed angles in CBR may be very large, and thus the very large number of required bits would be an undesirable overhead.

In the related art (e.g., P. Sangdeh, H. Pirayesh, A. Mobiny and H. Zeng, "LB-SciFi: Online Learning-Based Channel Feedback for MU-MIMO in Wireless LANs," 2020 IEEE 28th International Conference on Network Protocols (ICNP), 2020), a feedforward neural network (FNN) is used as an autoencoder for channel feedback procedures in WLAN.

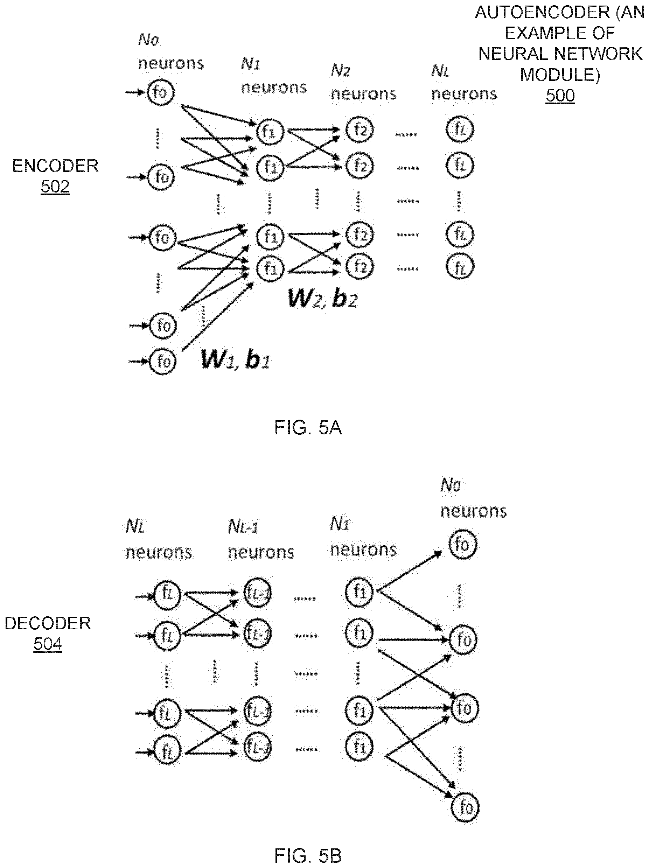

FIG. 5A illustrates an encoder 502 of an autoencoder 500 and FIG. 5B illustrates a decoder 504 of the autoencoder 500. The autoencoder 500 is an example of neural network modules that may be used in the disclosure. Other neural network modules, for example, convolutional neural networks (CNNs) and a transformer, may be used in the disclosure, instead of the autoencoder 500.

In FIG. 5A, the encoder has (L + 1) layers: one input layer, (L - 1) hidden layers and one output layer. The activation function for all neurons of the lth layer is defined as $f_l(\cdot)$, where $l \in [0, L]$. The activation functions are linear when $l = 0,L$ (i.e., $f_0(s_0) = s_0$ and $f_L(s_L) = s_L$), leaky rectified linear unit (ReLU) for other $l$ (hidden layers). The number of neurons for the lth layer is defined as $N_l$. The input (before activation) to the lth layer is defined as $s_l$, whose size is $N_l \times 1$. $W_l$ and $b_l$ (shown in FIG. 5A) are weighting and bias coefficients between the ($l$ - 1)th and the lth layer, respectively. Matrix $W_l$ has size $N_l \times N_{l-1}$, and vector $b_l$ has size $N_l \times 1$. Thus, the following relation is obtained: $s_l = W_l f_{l-1}(s_{l-1}) + b_l$, $l \in [1, L]$.

As shown in FIG. 5B, the decoder has a similar structure. The input is $\hat{s}_L$ and the following relation is obtained:

$$\hat{s}_{L-l} = \widehat{W}_{L-l}f_{L-l+1}(\hat{s}_{L-l+1}) + \hat{b}_{L-l}, l \in [1, L]$$

Here, matrix $\hat{W}_{L-l}$ has size $N_{L-l} \times N_{L-l+1}$, and vector $\hat{b}_{L-l}$ has size $N_{L-l} \times 1$.

The number of weighting coefficients is the same at the encoder and at the decoder. However, the number of bias coefficients may not be the same. For example, the number of bias coefficients in the encoder is $\sum_{l=1}^{L} N_l$, and the number of bias coefficients in the decoder is $\sum_{l=1}^{L} N_{L-l}$.

In the related art, during a training phase at the beamformer, the decoder's input is set to the encoder's output, i.e., $\hat{s}_L = s_L$. Two separate autoencoders are used for $\phi$ and $\psi$, respectively, thus the encoder input $s_0$ is either $\phi$ or $\psi$. The coefficients in the neural network (joint encoder-decoder) are trained by minimizing the difference between $s_0$ and the decoder output. Once the training is complete, the coefficients in the (two separate) encoders are sent to the beamformee (i.e., training information update), which can then use the encoders to compress the angles before put the angles in the CBR for feedback transmission. Note that the neural work normally uses a 'single-precision floating-point format' (for example, IEEE 754 standard format having a total of 32 bits for each word) for the coefficients to guarantee learning performance.

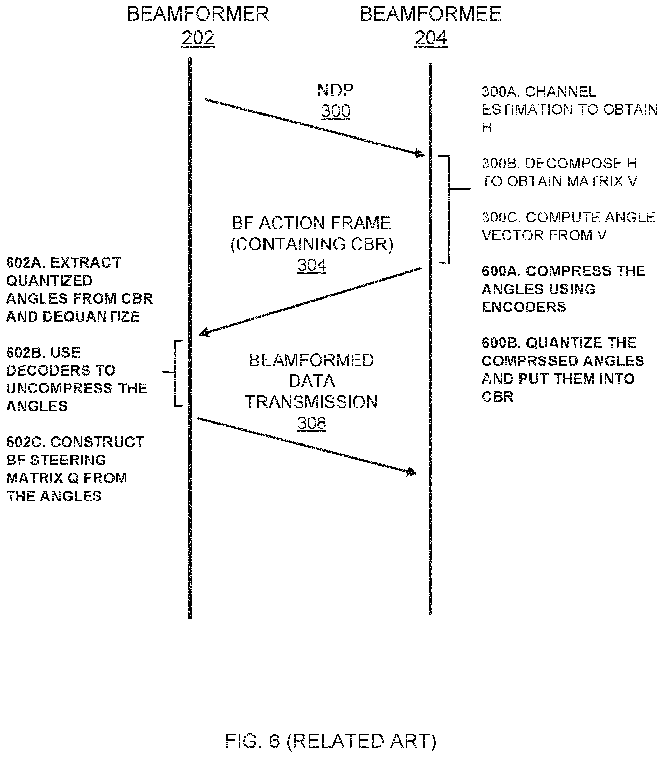

FIG. 6 illustrates a beamforming phase after the training phase is completed, in the related art. The bolded operations shown in FIG. 6 (conventional beamforming scheme with the autoencoder) are different from the operations shown in FIG. 3 (the legacy beamforming scheme that does not include an autoencoder).

In operation 600A, the beamformee 204 compresses the angles using the encoders.

In operation 600B, the beamformee 204 quantizes the compressed angles and put the quantized compressed angles into the CBR. The quantization at the beamformee 204 is to reduce feedback overhead. In one embodiment, both the beamformee 204 and the beamformer 202 know the scale factor for the quantization, so that the quantized compressed angles can be expressed as integers.

In operation 602A, the beamformer 202 extracts the quantized compressed angles from the CBR and de-quantizes the compressed angles.

In operation 602B, the beamformer 202 uses the decoders and un-compresses the compressed angles.

In operation 602C, the beamformer 202 constructs a BF steering matrix Q from the angles.

As described below, the disclosure proposes multiple embodiments that improve the beamforming procedures in the above-described related art.

In one embodiment, neural network quantization may be used to reduce communication overhead during a training of the autoencoder 500.

In one embodiment, a steering matrix is used as an input to the autoencoder 500, so just one encoder-decoder pair may be required. The related art may require two encoder-decoder pairs.

In one embodiment, information bits may be required to represent 'floating-point' values for beamforming feedback. In the related art, information bits may be required to represent 'integers.'

In one embodiment, neural network coefficients may be required in the training information update. In the related art, both codebook and neural network coefficients may be required.

An advantage of the embodiments in the disclosure is to reduce the computational complexity of beamforming feedback generation by a significant amount, compared with the related art. Moreover, when the training information update is performed frequently, the embodiments in the disclosure outperform the related art in terms of goodput performance

Some embodiments of the disclosure may require neural network quantization and requires specific quantization parameters (e.g., scale factors) to be sent over-the-air. Some embodiments of the disclosure may require feedback for compressed steering matrices. The related art may require feedback for the two compressed angles or for codebook index.

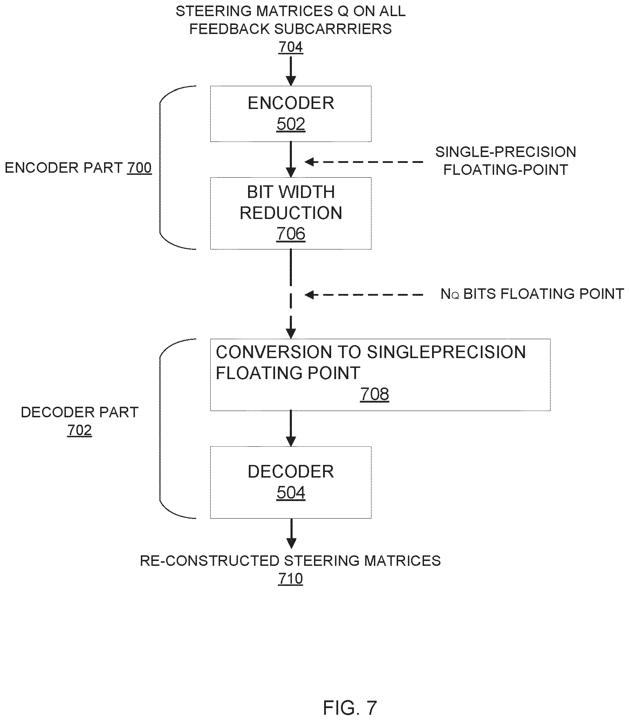

FIG. 7, FIG. 8, and FIG. 9 illustrate a proposed beamforming scheme having an encoder part 700 and a decoder part 702 in accordance with embodiments of the disclosure.

FIG. 7 shows a structure of an autoencoder used in the proposed beamforming procedure of the disclosure, which has the encoder part 700 and the decoder part 702. The encoder part 700 may include the encoder 502 shown in FIG. 5A and the decoder part 702 may include the decoder 504 shown in FIG. 5B. The encoder 502 and the decoder 504 may be included in the autoencoder 500, but the disclosure is not limited to the autoencoder 500. In one embodiment, the autoencoder 500 may be replaced with the CNNs. In one embodiment, the autoencoder 500 may be replaced with the transformer.

At operation 704 of FIG. 7, the input to the encoder part 700 is steering matrices Q. A single input sample $s_0$ is a $N_0 \times 1$ vector collecting a real value or an imaginary value of an element in steering matrix Q on all $N_{sc}$ selected feedback subcarriers ($N_0 = N_{sc}$). The information compression is in the dimension of subcarriers, P input samples need to be processed by a trained autoencoder during inference.

At operation 706, a bit width reduction module is performed. In one embodiment, the bit width module is stored in the memory (the first memory 210 or the second memory 216), which may be performed by the processor (the first processor 208 or the second processor 214). By performing the bit with reduction module, the bit width of the output of the encoder part 700 is reduced by compression from the single-precision floating-point format to $N_Q$ bits floating-point ($N_Q < 32$). In one embodiment, the bit width reduction module may correspond to a combination of software (e.g., program, application) and hardware (e.g., a memory, a processor) installed in the beamformee 204 or the beamformer 202 .

In the decoder part 702, at operation 708, a conversion from the $N_Q$ bits floating-point ($N_Q < 32$) to the single-precision floating-point format is performed. Then, at the decoder 504, single-precision floating-point format is used. There is a precision loss due to the performance of the bit width reduction module 706, however, the feedback overhead may be reduced.

In the related art, the scale factor of the quantization is 'fixed.' In contrast, the scale (exponent) of the disclosure is 'dynamic' since the output of the encoder 502 (of the encoder part 700) has a format of single-precision floating point. Moreover, in the related art, the quantization is only performed during inference stage. In contrast, the proposed bit width reduction module 706 is in the encoder part 700 during both of a neural network training phase and an inference phase.

In the related art, one of the key drawbacks of beamforming with artificial intelligence/machine learning is the introduction of the communication overhead during the training. Examples of the communication overhead are 1) trained database, 2) trained codebook, and 3) coefficients of neural network. For example, those overheads may need to be transmitted over-the-air from a beamformer (e.g., AP1) to a beamformee (e.g., STA1).

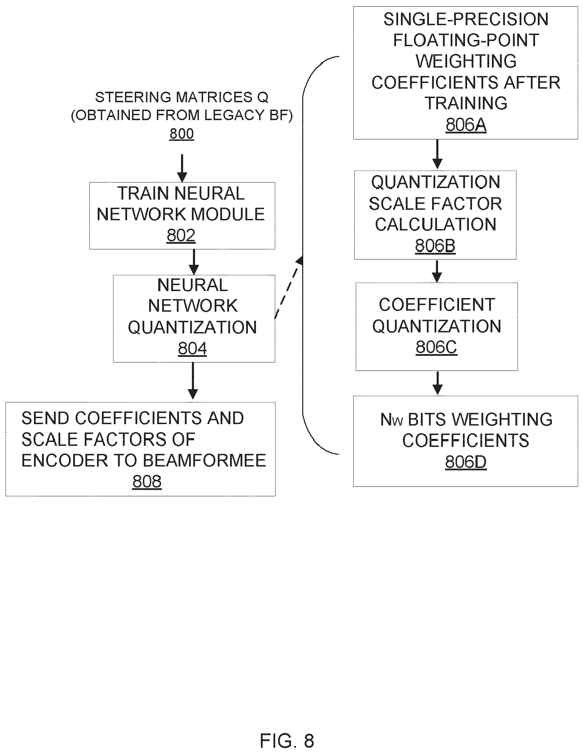

FIG. 8 illustrates a training phase of the proposed scheme, which is performed at the beamformer 202. At operation 800, the steering matrices Q (obtained from the legacy beamforming procedure) are sent to the autoencoder 500 for training. At operation 802, the autoencoder 500 is trained with the obtained steering matrices Q. One feature of the proposed scheme is to perform the 'neural network quantization' (804) after the training is completed at operation 802, in order to reduce the communication overhead used for sending coefficients of the encoder part 700.

In one embodiment, the 'neural network quantization' (804) is performed on weighting coefficients (of the trained autoencoder) only, and maintain the single-precision floating-point format for the bias coefficients (806A). The 'neural network quantization' (804) is performed independently for weighting matrices ($W_l$ or $\hat{W}_{L-l}$). For each weighting matrix, a scale factor (using $N_{scale}$ bits) is calculated first based on the values of the elements or coefficients in the weighting matrix (806B), then the coefficients are quantized (806C) to $N_w$ bits integers ($N_w \leq 32$) (806D).

Note that the scale factor may be different for different weighting matrices, and the quantization is not used when $N_w = 32$. Both the scale factors and the quantized weighting coefficients in integers need to be sent over-the-air from the beamformer 202 to the beamformee 204 (operation 808). In this way, both the storage requirement and the communication overhead for coefficients may be reduced.

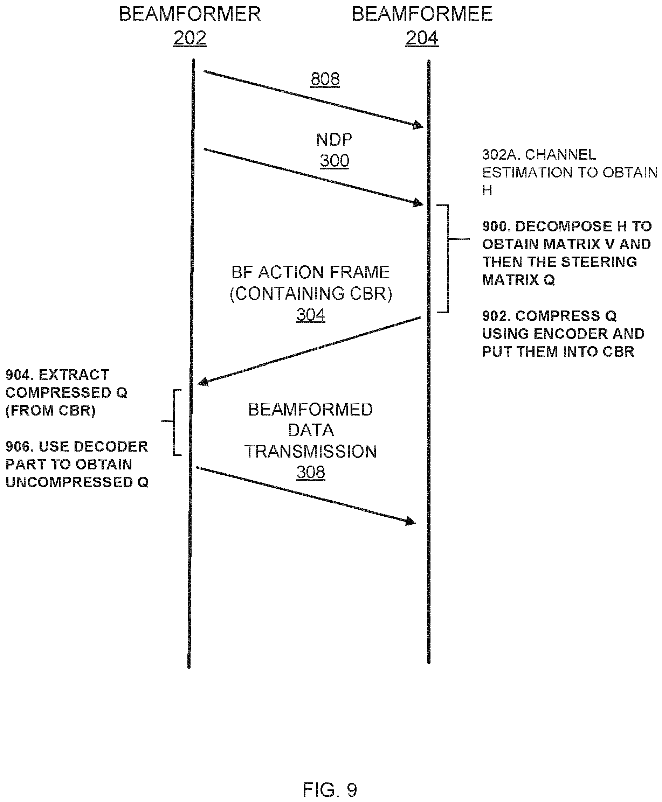

FIG. 9 illustrates a beamforming phase of the proposed scheme, which may occur after the training (in FIG. 8) is completed. At operation 900, the beamformee 204 decomposes the channel (H) to obtain a matrix (V) and then, the steering matrix Q. In one embodiment, the beamformee 204 decomposes the channel (H) via Givens rotation in accordance with IEEE 802.11 standards.

At operation 902, the beamformee 204 compresses the steering matrix Q using the encoder and put the compressed steering matrix Q into the CBR. That is, at operation 902, the beamformee 204 uses a plurality of elements (the original single-precision floating-point bias coefficients, the quantized $N_w$-bits weighting coefficients in integer, and the $N_{scale}$-bits scale factors) to compress the steering matrix Q. When the neural network quantization is used ($N_w <$ 32), the compression (inference) may be expressed as:

$$s_l = \gamma_l [W_l / \gamma_l] f_{l-1}(s_{l-1}) + b_l, , l \in [1, L]$$

Here, $[W/\gamma_l]$ is the quantized weighting coefficients in integer, $\gamma_l$ is the scale factor for matrix $W_l$.

At operation 904, the beamformer 202 extracts the compressed steering matrix Q from the CBR.

At operation 906, the beamformer 202 uses the decoder part 702 of the autoencoder 500 to obtain uncompressed steering matrix Q. As illustrated in FIG. 7, the decoder part 702 of the autoencoder 500 includes a module 708 to perform the conversion of $N_Q$ bits floating point of the compressed steering matrix Q to the single precision floating point. Then, the decoder 504 uses the single precision floating point of the compressed steering matrix Q to obtain the uncompressed steering matrix Q.

At operation 308, the beamformer 202 uses the obtained steering matrix Q for transmitting beamformed data to the beamformee 204.

The disclosure also proposes a zero-layer autoencoder, as described below.

In one embodiment, the proposed scheme in FIG. 7 may include a special case when L = 0. In this embodiment, the encoder 502 (of the encoder part 700) is not used for compression, and thus, the steering matrix Q (704) goes directly to the bit width reduction module 706 in FIG. 7. Accordingly, the training phase (FIG. 8) may be not required, and there is no overhead for the training information update. The purpose of this special design is to further reduce the overhead in the training information update and the complexity of feedback generation, although the feedback overhead may increase.

The proposed beamforming scheme of the disclosure performs better than legacy schemes in the related art. A benefit of the proposed beamforming scheme is to reduce computational complexity significantly. For example, the following [Table 1] shows that the proposed beamforming scheme performs significantly better than the legacy beamforming scheme and the autoencoder scheme in the related art (P. Sangdeh, H. Pirayesh, A. Mobiny and H. Zeng, "LB-SciFi: Online Learning-Based Channel Feedback for MU-MIMO in Wireless LANs," 2020 IEEE 28th International Conference on Network Protocols (ICNP), Oct. 2020) in terms of at least two performance parameters: 'Communication overhead in training phase (KB)' and 'Number of multiplications per CBR':

[Table 1]

| BF scheme | Communication overhead for CBR in BF phase (bits) | Communication overhead in training phase (KB) | Number of multiplications per CBR |
|---|---|---|---|
| Legacy beamforming scheme | 8320 when $N_b$ = 4<br>4992 when $N_b$ = 2 | 0 | 435K |
| Autoencoder scheme in the related art | 3328 | 109 | 788K |
| Proposed beamforming scheme | 3840 | 3 | 88K |

Also, another benefit of the proposed beamforming scheme is the precision of reconstructed steering matrix Q, as described above with respect to FIG. 7, and thus, much better goodput performance.

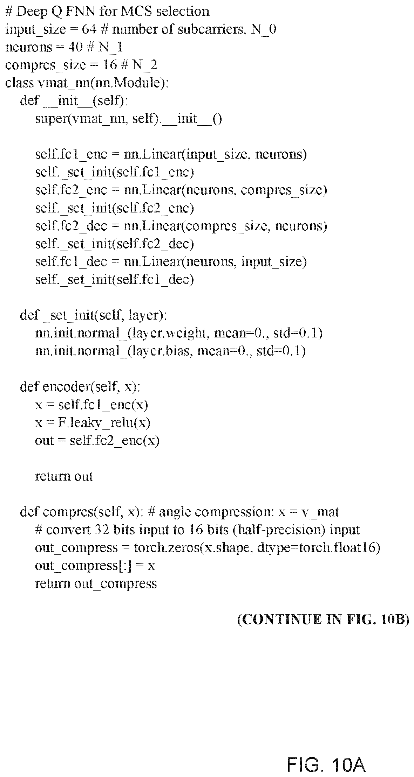

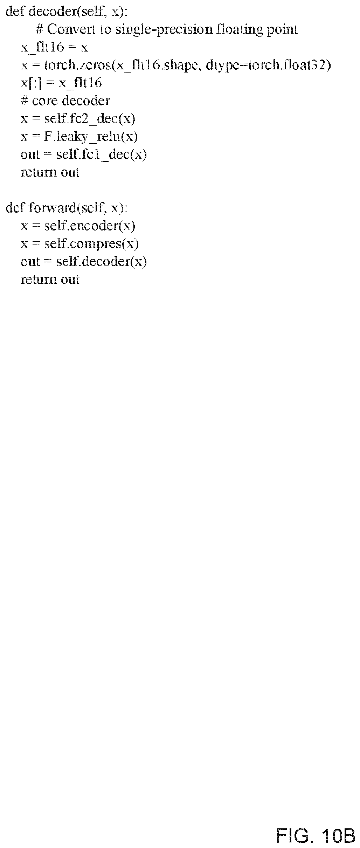

FIG. 10A and FIG. 10B show an example of software codes for implementing a proposed model for autoencoder-based beamforming CSI feedback compression (L=2, N_2=16). The software codes may be run with Python version 3.6 and PyTorch version 1.9.0. For example, the module 'def encoder(self, x)' implements the above-described encoder part 700 of the autoencoder and the module 'def decoder(self, x)' implements the above-described decoder 7 02 of the autoencoder.

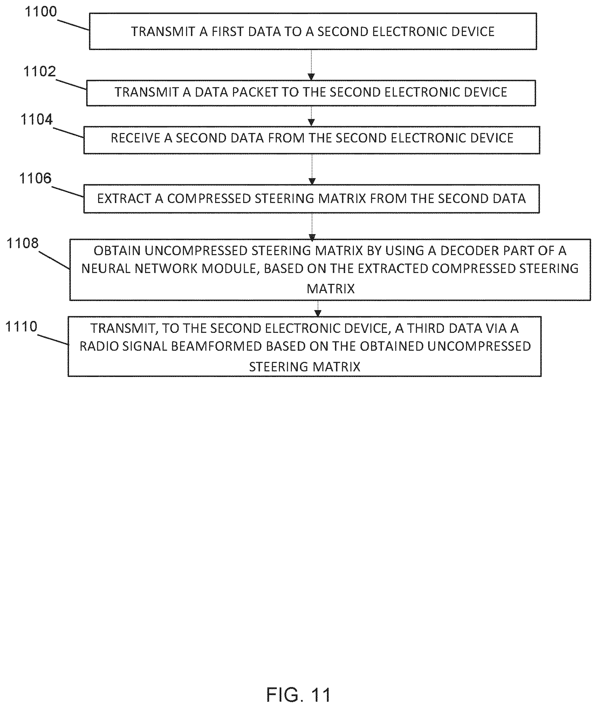

FIG. 11 illustrates a first flow chart of embodiments of the disclosure. Specifically, FIG. 11 illustrates a computer-implemented operation procedure performed by the first electronic device (beamformer 202) for reducing a feedback overhead of beamforming in a wireless communication system. The computer-implemented method includes the following operations.

At operation 1100, the first electronic device may transmit a first data to the second electronic device (beamformee 204). Operation 1100 may correspond to the above-described operation 808. In one embodiment, the first data may include 1) a plurality of weighting coefficients of the encoder 502 of the autoencoder and 2) a plurality of scale factors of the encoder 502 of the autoencoder.

At operation 1102, the first electronic device may transmit a data packet to the second electronic device. Operation 1102 may correspond to the above-described operation 300. In one embodiment, the data packet is a null data packet (NDP) of the wireless communication system.

At operation 1104, the first electronic device may receive a second data from the second electronic device. Operation 1104 may correspond to the above-described operation 304. In one embodiment, the second data may include a beamforming (BF) action frame, and the BF action frame may include a compressed beamforming report (CBR) field.

At operation 1106, the first electronic device may extract a compressed steering matrix from the second data. Operation 1106 may correspond to the above-described operation 904.

At operation 1108, the first electronic device may obtain uncompressed steering matrix by using a decoder part of an autoencoder, based on the extracted compressed steering matrix. Operation 1108 may correspond to the above-described operation 906.

At operation 1110, the first electronic device may transmit, to the second electronic device, a third data via a radio signal beamformed based on the obtained uncompressed steering matrix. Operation 1110 may correspond to the above-described operation 908.

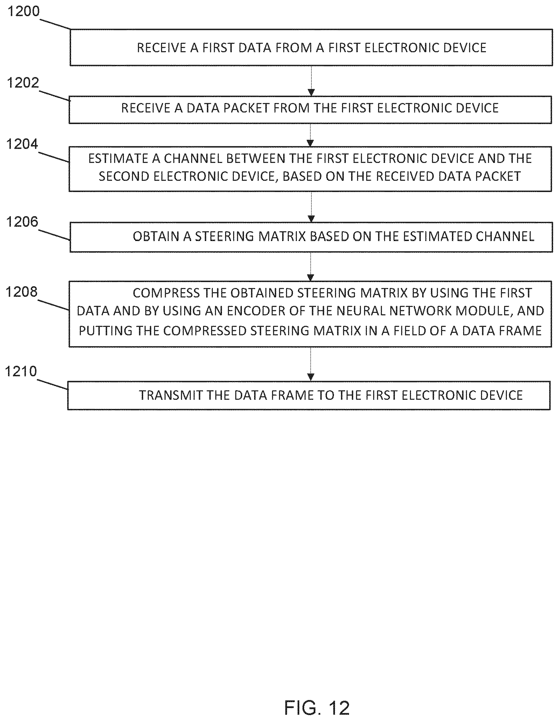

FIG. 12 illustrates a second flow chart of embodiments of the disclosure. Specifically, FIG. 12 illustrates a computer-implemented operation procedure performed by the second electronic device for reducing a feedback overhead of beamforming in a wireless communication system. The computer-implemented operation procedure of FIG. 12 includes the following operations.

At operation 1200, the second electronic device may receive a first data from a first electronic device. Operation 1200 may correspond to the above-described operation 808.

At operation 1202, the second electronic device may receiving the data packet from the first electronic device. Operation 1202 may correspond to the above-described operation 300.

At operation 1204, the second electronic device may estimate a channel between the first electronic device and the second electronic device, based on the received data packet. Operation 1204 may correspond to the above-described operation 302A.

At operation 1206, the second electronic device may obtain a steering matrix based on the estimated channel. Operation 1206 may correspond to the above-described operation 900.

At operation 1208, the second electronic device may compress the obtained steering matrix by using the first data and by using the encoder 502 of an autoencoder, and putting the compressed steering matrix in a field (CBR) of a data frame (BF action frame). Operation 1208 may correspond to the above-described operation 902.

At operation 1210, the second electronic device may transmit the data frame to the first electronic device. Operation 1210 may correspond to the above-described operation 304.

The disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. A singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., via wires), wirelessly, or via a third element.

As used in connection with the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

One or more embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to one or more embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to one or more embodiments, each component (e.g., a module or a program) of the above-described components may include a single entity or multiple entities. According to one or more embodiments, one or more of the above-described components may be omitted, or one or more other components may be added. Alternatively or additionally, a plurality of components (e.g., modules or programs) may be integrated into a single component. In such a case, according to one or more embodiments, the integrated component may still perform one or more functions of each of the plurality of components in the same or similar manner as they are performed by a corresponding one of the plurality of components before the integration. According to one or more embodiments, operations performed by the module, the program, or another component may be carried out sequentially, in parallel, repeatedly, or heuristically, or one or more of the operations may be executed in a different order or omitted, or one or more other operations may be added.

According to one or more embodiments, in a non-volatile storage medium storing instructions, the instructions may be configured to, when executed by at least one processor, cause the at least one processor to perform at least one operation. The at least one operation may include displaying an application screen of a running application on a display, identifying a data input field included in the application screen, identifying a data type corresponding to the data input field, displaying at least one external electronic device, around the electronic device, capable of providing data corresponding to the identified data type, receiving data corresponding to the identified data type from an external electronic device selected from among the at least one external electronic device through a communication module, and entering the received data into the data input field.

The embodiments of the disclosure described in the present specification and the drawings are only presented as specific examples to easily explain the technical content according to the embodiments of the disclosure and help understanding of the embodiments of the disclosure, not intended to limit the scope of the embodiments of the disclosure. Therefore, the scope of one or more embodiments of the disclosure should be construed as encompassing all changes or modifications derived from one or more embodiments of the disclosure in addition to the embodiments disclosed herein.

**Claims**

1. A computer-implemented method performed by a first electronic device for reducing a feedback overhead of beamforming in a wireless communication system, the computer-implemented method comprising:

    transmitting a first data to a second electronic device;
    transmitting a data packet to the second electronic device;
    receiving a second data from the second electronic device;
    extracting a compressed steering matrix from the second data;
    obtain uncompressed steering matrix by using a decoder part of a neural network module, based on the extracted compressed steering matrix; and
    transmitting, to the second electronic device, a third data via a radio signal beamformed based on the obtained uncompressed steering matrix.

2. The computer-implemented method of claim 1, wherein the first electronic device is a beamformer and the second electronic device is a beamformee in the wireless communication system.

3. The computer-implemented method of claim 1, wherein the neural network module corresponds to an autoencoder, a convolutional neural network, or a transformer.

4. The computer-implemented method of claim 1, wherein the data packet is a null data packet of the wireless communication system,

wherein the second data comprises a beamforming (BF) action frame, and
wherein the BF action frame comprises a compressed beamforming report (CBR) field.

5. The computer-implemented method of claim 1, wherein the first data comprises 1) a plurality of weighting coefficients of an encoder of the neural network module and 2) a plurality of scale factors of the encoder of the neural network module.

6. The computer-implemented method of claim 1, further comprising:

obtaining a steering matrix;
training the neural network module, based on the obtained steering matrix, the neural network module comprising an encoder and a decoder; and
performing a neural network quantization on a plurality of weighting coefficients of the encoder and a plurality of scale factors of the encoder,
wherein the first data comprises the plurality of weighting coefficients of the encoder and the plurality of scale factors of the encoder.

7. The computer-implemented method of claim 6, wherein the obtaining of the steering matrix comprises obtaining a steering matrix from a legacy beamforming procedure.

8. The computer-implemented method of claim 6, wherein the performing of the neural network quantization comprises:

maintaining a single-precision floating-point format of the plurality of weighting coefficients of the encoder;
quantizing the plurality of scale factors of the encoder; and
quantizing the plurality of weighting coefficients of the encoder.

9. The computer-implemented method of claim 8, wherein the quantized weighting coefficients of the encoder are integers.

10. A computer-implemented method performed by a second electronic device for reducing a feedback overhead of beamforming in a wireless communication system, the computer-implemented method comprising:

receiving a first data from a first electronic device;
receiving a data packet from the first electronic device;
estimating a channel between the first electronic device and the second electronic device, based on the received data packet;
obtaining a steering matrix based on the estimated channel;
compressing the obtained steering matrix by using the first data and by using an encoder of a neural network module, and putting the compressed steering matrix in a field of a data frame; and
transmitting the data frame to the first electronic device.

11. The computer-implemented method of claim 10, wherein the first data comprises 1) a plurality of weighting coefficients of the encoder of the neural network module and 2) a plurality of scale factors of the encoder of the neural network module.

12. The computer-implemented method of claim 10, wherein the data packet is a null data packet of the wireless communication system.

13. The computer-implemented method of claim 10, further comprising receiving, from the first electronic device, a third data via a radio signal beamformed based on the steering matrix.

14. A first electronic device of a wireless communication system, the first electronic device comprising:

a first transceiver;
a first memory;

a first processor operatively connected with the first memory and the first transceiver, the first processor configured to:

transmit a first data to a second electronic device;
transmit a data packet to the second electronic device;
receive a second data from the second electronic device;
extract compressed steering matrix from the second data;
obtain uncompressed steering matrix by using a decoder part of a neural network module, based on the extracted compressed steering matrix; and
transmit, to the second electronic device, a third data via a radio signal beamformed based on the obtained uncompressed steering matrix.

15. The first electronic device of claim 14, wherein the first electronic device is a beamformer and the second electronic device is a beamformee in the wireless communication system.

FIG. 1

200

BEAMFORMER (FIRST
ELECTRONIC DEVICE)

202

BEAMFORMEE (SECOND
ELECTRONIC DEVICE)

204

FIRST ANTENNA
205

FIRST TRANSCEIVER
206

FIRST PROCESSOR
208

FIRST MEMORY
210

SECOND ANTENNA
211

SECOND TRANSCEIVER
212

SECOND PROCESSOR
214

SECOND MEMORY
216

FIG. 2

BEAMFORMER
202

BEAMFORMEE
204

NDP
300

300A. CHANNEL
ESTIMATION TO OBTAIN
H

300B. DECOMPOSE H
TO OBTAIN MATRIX V

BF ACTION FRAME
(CONTAINING CBR)
304

300C. COMPUTE ANGLE
VECTOR FROM V

302D. COMPRESS THE
ANGLES AND PUT THEM
INTO CBR

306A. EXTRACT
COMPRESSED
ANGLES FROM CBR

BEAMFORMED
DATA
TRANSMISSION
308

206B. CONSTRUCT
BF STEERING
MATRIX Q FROM
THE ANGLES

FIG. 3 (RELATED ART)

FIG. 4 (RELATED ART)

AUTOENCODER (AN
EXAMPLE OF
NEURAL NETWORK
MODULE)
500

FIG. 5A

FIG. 5B

BEAMFORMER
202

BEAMFORMEE
204

NDP
300

300A. CHANNEL ESTIMATION TO OBTAIN H

300B. DECOMPOSE H TO OBTAIN MATRIX V

300C. COMPUTE ANGLE VECTOR FROM V

BF ACTION FRAME (CONTAINING CBR)
304

**602A. EXTRACT QUANTIZED ANGLES FROM CBR AND DEQUANTIZE**

**600A. COMPRESS THE ANGLES USING ENCODERS**

**602B. USE DECODERS TO UNCOMPRESS THE ANGLES**

BEAMFORMED DATA TRANSMISSION
308

**600B. QUANTIZE THE COMPRSSED ANGLES AND PUT THEM INTO CBR**

**602C. CONSTRUCT BF STEERING MATRIX Q FROM THE ANGLES**

FIG. 6 (RELATED ART)

18

STEERING MATRICES Q ON ALL
FEEDBACK SUBCARRRIERS
704

ENCODER
502

ENCODER PART 700

SINGLE-PRECISION
FLOATING-POINT

BIT WIDTH
REDUCTION
706

$N_Q$ BITS FLOATING POINT

CONVERSION TO SINGLEPRECISION
FLOATING POINT
708

DECODER PART
702

DECODER
504

RE-CONSTRUCTED STEERING MATRICES
710

FIG. 7

STEERING MATRICES Q
(OBTAINED FROM LEGACY BF)
800

TRAIN NEURAL
NETWORK MODULE
802

NEURAL
NETWORK
QUANTIZATION
804

SEND COEFFICIENTS AND
SCALE FACTORS OF
ENCODER TO BEAMFORMEE
808

SINGLE-PRECISION
FLOATING-POINT
WEIGHTING
COEFFICIENTS AFTER
TRAINING
806A

QUANTIZATION
SCALE FACTOR
CALCULATION
806B

COEFFICIENT
QUANTIZATION
806C

$N_W$ BITS WEIGHTING
COEFFICIENTS
806D

FIG. 8

BEAMFORMER
202

BEAMFORMEE
204

808

NDP
300

302A. CHANNEL
ESTIMATION TO OBTAIN
H

900. DECOMPOSE H TO
OBTAIN MATRIX V AND
THEN THE STEERING
MATRIX Q

BF ACTION FRAME
(CONTAINING CBR)
304

902. COMPRESS Q
USING ENCODER AND
PUT THEM INTO CBR

904. EXTRACT
COMPRESSED Q
(FROM CBR)

906. USE DECODER
PART TO OBTAIN
UNCOMPRESSED Q

BEAMFORMED
DATA
TRANSMISSION
308

FIG. 9

```
# Deep Q FNN for MCS selection
input_size = 64 # number of subcarriers, N_0
neurons = 40 # N_1
compres_size = 16 # N_2
class vmat_nn(nn.Module):
    def __init__(self):
        super(vmat_nn, self).__init__()

        self.fc1_enc = nn.Linear(input_size, neurons)
        self._set_init(self.fc1_enc)
        self.fc2_enc = nn.Linear(neurons, compres_size)
        self._set_init(self.fc2_enc)
        self.fc2_dec = nn.Linear(compres_size, neurons)
        self._set_init(self.fc2_dec)
        self.fc1_dec = nn.Linear(neurons, input_size)
        self._set_init(self.fc1_dec)

    def _set_init(self, layer):
        nn.init.normal_(layer.weight, mean=0., std=0.1)
        nn.init.normal_(layer.bias, mean=0., std=0.1)

    def encoder(self, x):
        x = self.fc1_enc(x)
        x = F.leaky_relu(x)
        out = self.fc2_enc(x)

        return out

    def compres(self, x): # angle compression: x = v_mat
        # convert 32 bits input to 16 bits (half-precision) input
        out_compress = torch.zeros(x.shape, dtype=torch.float16)
        out_compress[:] = x
        return out_compress
```

**(CONTINUE IN FIG. 10B)**

FIG. 10A

```
def decoder(self, x):
    # Convert to single-precision floating point
    x_flt16 = x
    x = torch.zeros(x_flt16.shape, dtype=torch.float32)
    x[:] = x_flt16
    # core decoder
    x = self.fc2_dec(x)
    x = F.leaky_relu(x)
    out = self.fc1_dec(x)
    return out

def forward(self, x):
    x = self.encoder(x)
    x = self.compres(x)
    out = self.decoder(x)
    return out
```

FIG. 10B

1100 — TRANSMIT A FIRST DATA TO A SECOND ELECTRONIC DEVICE

1102 — TRANSMIT A DATA PACKET TO THE SECOND ELECTRONIC DEVICE

1104 — RECEIVE A SECOND DATA FROM THE SECOND ELECTRONIC DEVICE

1106 — EXTRACT A COMPRESSED STEERING MATRIX FROM THE SECOND DATA

1108 — OBTAIN UNCOMPRESSED STEERING MATRIX BY USING A DECODER PART OF A NEURAL NETWORK MODULE, BASED ON THE EXTRACTED COMPRESSED STEERING MATRIX

1110 — TRANSMIT, TO THE SECOND ELECTRONIC DEVICE, A THIRD DATA VIA A RADIO SIGNAL BEAMFORMED BASED ON THE OBTAINED UNCOMPRESSED STEERING MATRIX

FIG. 11

1200 — RECEIVE A FIRST DATA FROM A FIRST ELECTRONIC DEVICE

1202 — RECEIVE A DATA PACKET FROM THE FIRST ELECTRONIC DEVICE

1204 — ESTIMATE A CHANNEL BETWEEN THE FIRST ELECTRONIC DEVICE AND THE SECOND ELECTRONIC DEVICE, BASED ON THE RECEIVED DATA PACKET

1206 — OBTAIN A STEERING MATRIX BASED ON THE ESTIMATED CHANNEL

1208 — COMPRESS THE OBTAINED STEERING MATRIX BY USING THE FIRST DATA AND BY USING AN ENCODER OF THE NEURAL NETWORK MODULE, AND PUTTING THE COMPRESSED STEERING MATRIX IN A FIELD OF A DATA FRAME

1210 — TRANSMIT THE DATA FRAME TO THE FIRST ELECTRONIC DEVICE

FIG. 12

Europäisches
Patentamt

European
Patent Office

Office européen
des brevets

## EUROPEAN SEARCH REPORT

Application Number

EP 23 21 8640

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZIYANG GUO (HUAWEI): "Study on AI CSI Compression", IEEE DRAFT; 11-23-0290-01-AIML-STUDY-ON-AI-CSI-COMPRESSION, IEEE-SA MENTOR, PISCATAWAY, NJ USA , vol. 802.11 AIML, no. 1 14 March 2023 (2023-03-14), pages 1-10, XP068201652, Retrieved from the Internet: URL:https://mentor.ieee.org/802.11/dcn/23/11-23-0290-01-aiml-study-on-ai-csi-compression.pptx [retrieved on 2023-03-14] * Slides 3, 4 (bottom part:AI solutions), 5, 6 * | 1-4,10, 12-15 | INV. H04B7/06 G06N3/0455 G06N3/0464 H04L25/02 |
| X | ZIMING HE (SAMSUNG): "Neural Network Quantization for Overhead Reduction in AIML Model Sharing", IEEE DRAFT; 11-23-0756-00-AIML-NEURAL-NETWORK-QUANTIZATION-FOR-OVERHEAD-REDUCTION-IN-AIML-MODEL-SHARING, IEEE-SA MENTOR, PISCATAWAY, NJ USA , vol. 802.11 AIML 5 May 2023 (2023-05-05), pages 1-9, XP068202411, Retrieved from the Internet: URL:https://mentor.ieee.org/802.11/dcn/23/11-23-0756-00-aiml-neural-network-quantization-for-overhead-reduction-in-aiml-model-sharing.pptx [retrieved on 2023-05-05] * Slides 2, 3, 4, 5 * | 1-15 | |

TECHNICAL FIELDS SEARCHED (IPC)

H04B
G06N
H04L

-/--

The present search report has been drawn up for all claims

| Place of search | Date of completion of the search | Examiner |
|---|---|---|
| Munich | 17 May 2024 | Palacián Lisa, Marta |

Europäisches Patentamt

European Patent Office

Office européen des brevets

**EUROPEAN SEARCH REPORT**

Application Number

EP 23 21 8640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SANGDEH PEDRAM KHEIRKHAH ET AL: "LB-SciFi: Online Learning-Based Channel Feedback for MU-MIMO in Wireless LANs", 2020 IEEE 28TH INTERNATIONAL CONFERENCE ON NETWORK PROTOCOLS (ICNP), IEEE, 13 October 2020 (2020-10-13), pages 1-11, XP033861598, DOI: 10.1109/ICNP49622.2020.9259366 [retrieved on 2020-11-13] * abstract * * figures 1,2 * * Section IV * * Algorithm 1; figure 6 * | 1-4,10, 12-15 | |
| Y | US 2020/112353 A1 (LIU JIANHAN [US]) 9 April 2020 (2020-04-09) * figure 3 * * paragraph [0004] - paragraph [0009] * * paragraph [0023] - paragraph [0036] * | 1-4,10, 12-15 | |
| Y | US 2023/131694 A1 (SABER HAMID [US] ET AL) 27 April 2023 (2023-04-27) * figures 5-7 * * paragraph [0024] - paragraph [0028] * * paragraph [0036] * * paragraph [0049] - paragraph [0052] * * paragraph [0066] - paragraph [0069] * * paragraph [0073] - paragraph [0074] * * paragraph [0078] * | 1-4,10, 12-15 | TECHNICAL FIELDS SEARCHED (IPC) |

The present search report has been drawn up for all claims

| Place of search | Date of completion of the search | Examiner |
|---|---|---|
| Munich | 17 May 2024 | Palacián Lisa, Marta |

EPO FORM 1503 03.82 (P04C01)

## ANNEX TO THE EUROPEAN SEARCH REPORT
## ON EUROPEAN PATENT APPLICATION NO.

EP 23 21 8640

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | | Publication date | Patent family member(s) | | Publication date |
|---|---|---|---|---|---|
| US 2020112353 | A1 | 09-04-2020 | CN | 111030742 A | 17-04-2020 |
| | | | EP | 3637633 A2 | 15-04-2020 |
| | | | TW | 202015361 A | 16-04-2020 |
| | | | US | 2020112353 A1 | 09-04-2020 |
| US 2023131694 | A1 | 27-04-2023 | CN | 115996160 A | 21-04-2023 |
| | | | DE | 102022126344 A1 | 20-04-2023 |
| | | | KR | 20230055987 A | 26-04-2023 |
| | | | TW | 202318275 A | 01-05-2023 |
| | | | US | 2023131694 A1 | 27-04-2023 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. SANGDEH ; H. PIRAYESH ; A. MOBINY ; H. ZENG.** LB-SciFi: Online Learning-Based Channel Feedback for MU-MIMO in Wireless LANs. *2020 IEEE 28th International Conference on Network Protocols (ICNP),* 2020
- Study on AI CSI Compression. *IEEE 802.11-23/0290r1,* 2023
- AI ML Use Case. *IEEE 802.11-22/1563r2,* September 2022

- **M. NAGEL et al.** A White Paper on Neural Network Quantization. *Qualcomm AI Research,* 2021
- **P. SANGDEH ; H. PIRAYESH ; A. MOBINY ; H. ZENG.** LB-SciFi: Online Learning-Based Channel Feedback for MU-MIMO in Wireless LANs. *2020 IEEE 28th International Conference on Network Protocols (ICNP),* October 2020